# EUROPÄISCHE PATENTSCHRIFT

(11) **EP 2 298 054 B1**
(45) Veröffentlichungstag und Bekanntmachung des Hinweises auf die Patenterteilung: **02.10.2013**
(21) Anmeldenummer: 10401143.2
(22) Anmeldetag: 18.08.2010
(51) Int. Cl.: A01C 7/06, A01C 7/10

(54) **Landwirtschaftliche Verteilmaschine mit mehreren Tanks zur Aufnahme verschiedener Materialien**
Agricultural distributor with a plurality of hoppers for different types of products
Machine de répartition agricole pouvant contenir différents matériaux

(30) Priorität: 22.09.2009 DE 102009044068
(43) Veröffentlichungstag der Anmeldung: 23.03.2011
(73) Patentinhaber: Amazonen-Werke H. Dreyer GmbH & Co. KG, 49205 Hasbergen (DE)
(72) Erfinder: Scheufler, Bernd, 49205 Hasbergen (DE); Resch, Rainer, 49170 Hagen a TW (DE); Dreyer, Justus, 49076 Osnabrück (DE)

(56) Entgegenhaltungen:
- EP-A1- 0 674 831
- EP-A1- 1 566 089
- EP-A2- 1 216 610
- US-B1- 6 584 920

## Beschreibung

Die Erfindung betrifft eine landwirtschaftliche Verteilmaschine mit einer mehrere Vorratsbehälter aufweisenden Vorratsbehältereinheit.

In den einzelnen Vorratsbehältern der Vorratsbehältereinheit werden unterschiedliche Materialiensorten eingefüllt, die über das jeweils zugeordnete Dosierorgan in Ausbringleitung in einstellbaren Mengen eingespeist wird. Es wird hierbei von der landwirtschaftlichen Praxis gefordert, dass die von den Dosierorganen ausgebrachten Mengen überprüft werden können um gegebenenfalls die Dosierorgane in entsprechender Weise so nachzustellen, dass auch die tatsächlich gewünschte Ausbringmenge ausgebracht wird. Hierbei sind für die Vorratsbehältereinheiten, die mehreren Vorratsbehälter zur Aufnahme verschiedener Materialien aufweisen, bisher keine entsprechenden praxisgerechten Lösungen bekannt.

Durch die EP 1 155 606 A2 ist eine landwirtschaftliche Verteilmaschine mit einem Vorratsbehälter, dem eine Dosiervorrichtung zugeordnet ist bekannt. Dieser Vorratsbehälter ist auf einem Rahmen angeordnet, wobei zwischen dem Rahmen und dem Vorratsbehälter ein Wiegesensor angeordnet ist. Über diesen Wiegesensor ist es möglich, die Ausbringmenge nur an diesem einzigen Vorratsbehälter, für das diesen einzigen Vorratsbehälter zugeordnete Dosierorgan zu ermitteln. Für eine Vorratsbehältereinheit mit mehreren Dosierorganen für unterschiedliche Mengen ist es jedoch nicht möglich, die von jedem Dosierorgan ausgebrachte Menge in dieser Weise zu ermitteln.

Durch die EP 0 307 042 B1 ist eine weitere landwirtschaftliche Verteilmaschine bekannt geworden. Die Verteilmaschine weist einen Vorratsbehälter mit einer Dosiervorrichtung auf. Oberhalb des Vorratsbehälters ist eine Entfernungsmesseinrichtung angeordnet über welche die Höhenlage der Oberfläche der sich im Vorratsbehälter befindlichen Gutmenge zu messen ist. Über die sich verändernde Höhenlage ist es hierbei, möglich die in diesem Vorratsbehälter befindliche Materialmenge, die über die Dosiervorrichtung ausgebracht wird, zu ermitteln.

Weiterhin ist aus der US6584920B1 eine Landwirtschaftliche Verteilmaschine mit einer zwei Vorratsbehälter aufweisenden Vorratsbehältereinheit, wobei die Vorratsbehältereinheit auf einem Tragrahmen aufgelagert ist, wobei jedem Vorratsbehälter zumindest ein Dosierorgan zum dosierten Ausbringen des sich im jeweiligen Vorratsbehälter befindlichen Materiales zugeordnet ist, wobei jedes Dosierorgan unabhängig von dem anderen Dosierorgan einstellbar ist.

Der Erfindung liegt die Aufgabe zugrunde, für eine landwirtschaftliche Verteilmaschine mit einer Vorratsbehältereinheit, die mehrere Vorratsbehälter für die Aufnahme unterschiedlicher Materialien aufweist, eine Messeinrichtung vorzuschlagen, mittels welcher die von jedem Dosierorgan ausgebrachte Materialmenge ermittelbar ist.

Diese Aufgabe wird erfindungsgemäß durch die Merkmale des Patentanspruches 1 gelöst. Infolge dieser Maßnahmen wird zunächst über die der gesamten Vorratsbehältereinheit zugeordneten Wiegesensoren die Gesamtmasse sämtlicher verschiedener Materialien, die in den verschiedenen Vorratsbehältern der Vorratsbehältereinheit enthalten sind bzw. deren Materialentnahme in Zusammenarbeit mit dem Bordrechner ermittelt. Mithilfe der den einzelnen Vorratbehälter zugeordneten weiteren Mitteln zur Ermittlung des zumindest in dem jeweiligen Vorratsbehälter befindlichen oder aus ihm entnommenen Materialmenge zugeordnet sind, lässt sich in Verbindung mit dem Bordrechner und den Wiegesensoren durch ein entsprechendes im Speicher des Bordrechners hinterlegtes Verrechnungsprogramm, die von den einzelnen Dosierorganen aus den einzelnen Vorratsbehältern entnommenen jeweiligen Materialmenge in überraschend einfacher Weise ermitteln.

Je nach auszubringendem Material kann das weitere Mittel ein Körnerzähler, eine Füllstandsmesseinrichtung oder ein kalibriertes Dosierorgan sein.

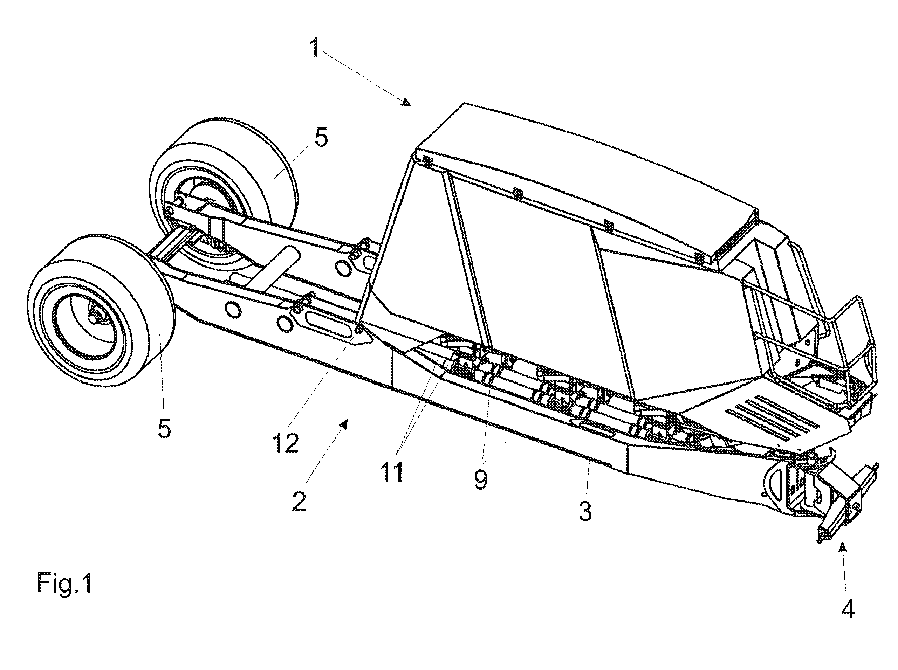

Weitere Einzelheiten der Erfindung sind der Beispielsbeschreibung und den Zeichnungen zu entnehmen. Hierbei zeigen
- Fig. 1: die auf einem Fahrgestell angeordnete Vorratsbehältereinheit einer landwirtschaftlichen Verteilmaschine in perspektivischer Darstellung und
- Fig. 2: die auf einem Fahrgestell angeordnete Vorratsbehältereinheit einer landwirtschaftlichen Verteilmaschine in perspektivischer Darstellung; wobei die Seitenwände der Vorratsbehältereinheit auf der rechten Seite teilweise nicht dargestellt sind.

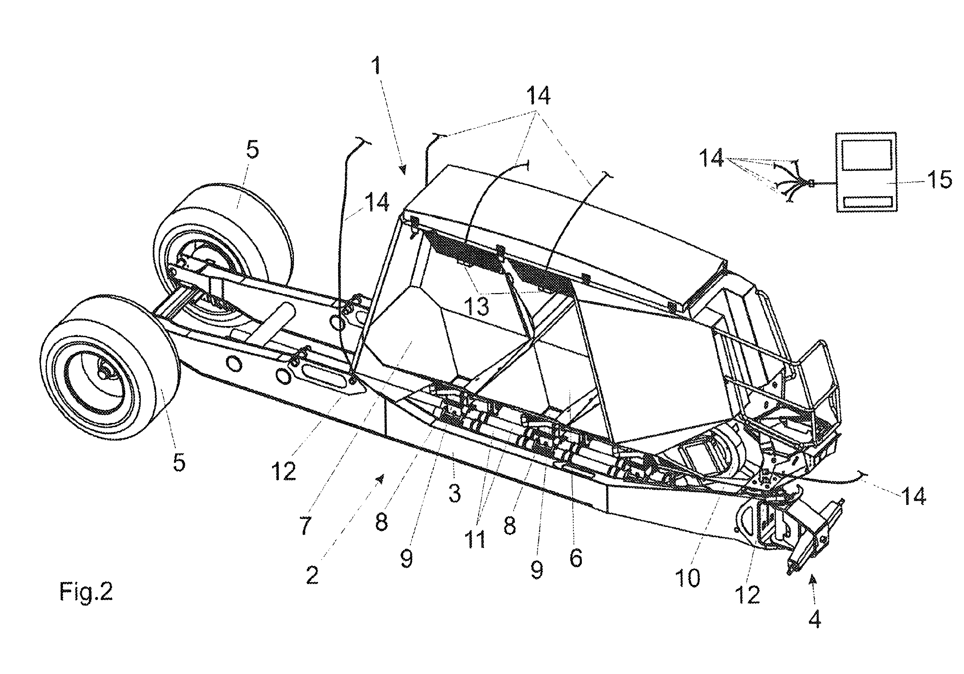

Die Vorratsbehältereinheit 1 einer landwirtschaftlichen Verteilmaschine, beispielsweise einer Sämaschine ist auf einem Fahrgestell 2 angeordnet. Dieses Fahrgestell 2 weist den Tragrahmen 3 auf. Auf der Vorderseite des Tragrahmens 3 ist die Zugdeichsel 4 die an eine Kuppeleinrichtung eines Ackerschleppers anzuordnen ist, angeordnet, während auf der Rückseite des Rahmens 3 sind die Laufräder 5 aufweisende Fahrgestell angeordnet. Auf der Rückseite des Rahmens 3 kann in nicht dargestellter weise eine Säschiene mit Säscharen mittels einer geeigneten Klumpungsvorrichtung angeordnet werden. Die Vorratsbehältereinheit 1 weist, wie die Fig. 2 zeigt, den vorderen 6 und den hinteren Vorratsbehälter 7 auf. Die Vorratsbehälter 6, 7 der Vorratsbehältereinheit 1 sind in dem unteren Bereich trichterförmig ausgebildet und weisen hier jeweils eine Auslauföffnung 9 auf. Der jeweiligen Auslauföffnung 8 ist mit einem Dosierorgan 9 zum dosierten Ausbringen des sich in dem jeweiligen Vorratsbehälter 6, 7 befindlichen Materiales zugeordnet. Jedes Dosierorgan 9 ist unabhängig von dem anderen Dosierorgan 9 einstellbar, so dass über das jeweilige Dosierorgan 9 eine gewünschte Menge Material aus dem Vorratsbehälter 6, 7 in die unterhalb des Dosierorgans9 angeordneten pneumatisch von einem Gebläse 10, welches motorisch angetrieben ist, beaufschlaget ist Leitungen 11 eingespeist wird. Die Leitungen 11 führen zu nicht dargestellten Verteileinrichtungen, von denen aus das Material auf zu Säscharen führenden Saatleitungen aufgeteilt wird.

Die Vorratsbehältereinheit 1 ist mittels als erste Mittel ausgestaltete Wiegesensoren 12 auf dem Tragrahmen 3 angeordnet. Mittels dieser Wiegesensoren 12 kann das sich in beiden Vorratsbehältern 6, 7 der Vorratsbehältereinheit 1 befindliche Materialmenge bzw. die über die beiden Dosierorgane 9 ausgebrachte Materialmenge ermittelt werden.

Des Weiteren ist zumindest einem der Vorratsbehälter 6, 7 der Vorratsbehältereinheit 1 ein weiteres Mittel 13 zur Ermittlung des zumindest in diesem Vorratsbehälter 6, 7 befindliche oder aus ihm entnommene Materialmenge zugeordnet. Im Ausführungsbeispiel sind beiden Vorratsbehältern 6, 7 entsprechend Mittel, die im Ausführungsbeispiel als Füllstandsmessereinrichtung 13 ausgebildet sind, wie sie beispielsweise durch die DE 38 76 908 T2 bekannt sind, angeordnet.

Sowohl die Wiegesensoren 12 wie auch die Füllstandsmesseinrichtungen 13 sind über Datenleitungen 14 mit einem Bordrechner 15 verbunden. In dem Bordrechner 15 ist ein Programm abgespeichert, mittels welchem aus den Daten der Wiegesensoren 12 und der Füllstandsmesseinrichtungen 13 die aus dem jeweiligen Vorratsbehälter 6, 7 entnommene Materialmenge ermittelbar ist.

Auch wenn nur einem von zwei Vorratsbehältern 6, 7 der Vorratsbehältereinheit 1 eine Füllstandsmesseinrichtung 13 sowie der gesamten Vorratsbehältereinheit 1 Wiegesensoren 12 zugeordnet sind, lässt sich durch eine entsprechende Verrechtung der Daten über den Bordrechner 15 die aus dem jeweiligen Vorratsbehälter 6, 7 entnommene Materialmenge ermitteln.

In nicht dargestellter Weise kann je nach Ausgestaltung der Verteilmaschine und deren Ausgestaltung der Dosierorgane 9 das weitere Mittel als Körnerzähler oder als kalibriertes Dosierorgan ausgebildet sein.

Beispielsweise wird man bei einer Sämaschine die Saatgut ausbringt, insbesondere einer Einzelkornsämaschine einen Körnerzähler verwenden.

Bei einer Volumendosierung zum Ausbringen von Saatgut oder Düngemittel kann auch ein kalibriertes Dosierorgan Verwendung finden, welches entsprechend Daten an den Bordrechner 15 liefert.

## Patentansprüche

1. Landwirtschaftliche Verteilmaschine mit einer zwei Vorratsbehälter ( 6, 7 ) aufweisenden Vorratsbehältereinheit ( 1 ), wobei die Vorratsbehältereinheit ( 1 ) auf einem Tragrahmen ( 3 ) aufgelagert ist, wobei jedem Vorratsbehälter ( 6, 7 ) zumindest ein Dosierorgan ( 9 ) zum dosierten Ausbringen des sich im jeweiligen Vorratsbehälter ( 6, 7 ) befindlichen Materiales zugeordnet ist, wobei jedes Dosierorgan ( 9 ) unabhängig von dem anderen Dosierorgan ( 9 ) einstellbar ist, wobei der Vorratsbehältereinheit ( 1 ) erste Mittel zur Ermittlung des sich in beiden Vorratsbehältern ( 6, 7 ) der Vorratsbehältereinheit ( 1 ) befindlichen Materialmengen zugeordnet sind, wobei die ersten Mittel als Wiegesensoren ( 12 ) ausgebildet sind, wobei nur einem der beiden Vorratsbehälter ( 6, 7 ) der Vorratsbehältereinheit ( 1 ) weitere Mittel ( 13 ) zur Ermittelung der zumindest in diesem Vorratsbehälter ( 6, 7 ) befindlichen oder aus ihm entnommenen Materialmenge zugeordnet ist, wobei mittels eines Bordrechners ( 15 ) aus den Daten der ersten ( 12 ) und weiteren Mittel ( 13 ) die aus dem jeweiligen Vorratsbehälter ( 6, 7 ) entnommene Materialmenge durch ein im Speicher des Bordrechners ( 15 ) hinterlegtes Verrechnungsprogramm durch entspre-chende Verrechnung der von den ersten ( 12 ) und weiteren ( 13 ) Mittel ermittelten Daten ermittelbar ist.

2. Verteilmaschine nach Anspruch 1, **dadurch gekennzeichnet, dass** das weitere Mittel als Körnerzähler ausgebildet ist.

3. Verteilmaschine nach Anspruch 1, **dadurch gekennzeichnet, dass** das weitere Mittel als Füllstandsmesseinrichtung ( 13 ) ausgebildet ist.

4. Verteilmaschine nach Anspruch 1, **dadurch gekennzeichnet, dass** das weitere Mittel als kalibriertes Dosierorgan ausgebildet ist.

## Claims

1. Agricultural distributor with a storage container unit (1) having two storage containers (6, 7), wherein the storage container unit (1) is mounted on a supporting frame (3), wherein each storage container (6, 7) is assigned at least one metering member (9) for the metered discharging of the material located in the particular storage container (6, 7), wherein each metering member (9) is adjustable independently of the other metering member (9), wherein the storage container unit (1) is assigned first means for determining the quantities of material located in the two storage containers (6, 7) of the storage container unit (1), wherein the first means are designed as weight sensors (12), wherein only one of the two storage containers (6, 7) of the storage container unit (1) is assigned further means (13) for determining the quantity of material at least located in said storage container (6, 7) or removed therefrom, wherein the quantity of material removed from the particular storage container (6, 7) can be determined from the data of the first means (12) and further means (13) by means of an onboard computer (15) by appropriate calculation by a calculating program stored in the memory of the onboard computer (15) of the data determined by the first means (12) and further means (13) .

2. Distributor according to Claim 1, **characterized in that** the further means is designed as a grain counter.

3. Distributor according to Claim 1, **characterized in that** the further means is designed as a level-measuring device (13).

4. Distributor according to Claim 1, **characterized in that** the further means is designed as a calibrated metering member.

## Revendications

1. Machine de distribution agricole comprenant une unité de réservoir de stockage (1) présentant deux réservoirs de stockage (6, 7), l'unité de réservoir de stockage (1) étant supportée sur un cadre de support (3), au moins un organe de dosage (9) pour la distribution dosée du matériau se trouvant dans le réservoir de stockage respectif (6, 7) étant affecté à chaque réservoir de stockage (6, 7), chaque organe de dosage (9) pouvant être ajusté indépendamment de l'autre organe de dosage (9), des premiers moyens pour déterminer les quantités de matériau se trouvant dans les deux réservoirs de stockage (6, 7) de l'unité de réservoir de stockage (1) étant associés à l'unité de réservoir de stockage (1), les premiers moyens étant réalisés sous forme de capteurs de pesage (12), d'autres moyens (13) pour déterminer la quantité de matériau se trouvant au moins dans ce réservoir de stockage (6, 7) ou prélevée de celui-ci étant associés seulement à l'un des deux réservoirs de stockage (6, 7) de l'unité de réservoir de stockage (1), la quantité de matériau prélevée de chaque réservoir de stockage (6, 7) pouvant être déterminée au moyen d'un ordinateur embarqué (15) à partir des données des premiers (12) et des autres moyens (13) par un programme de calcul consigné dans la mémoire des l'ordinateur embarqué (15) par calcul correspondant des données déterminées par les premiers (12) et les autres (13) moyens.

2. Machine de distribution selon la revendication 1, **caractérisée en ce que** l'autre moyen est réalisé sous forme de compteur de grains.

3. Machine de distribution selon la revendication 1, **caractérisée en ce que** l'autre moyen est réalisé sous forme de dispositif de mesure du niveau de remplissage (13).

4. Machine de distribution selon la revendication 1, **caractérisée en ce que** l'autre moyen est réalisé sous forme d'organe de dosage calibré.
